# EUROPÄISCHE PATENTANMELDUNG

(11) **EP 4 266 485 A1**
(43) Veröffentlichungstag der Anmeldung: **25.10.2023**
(21) Anmeldenummer: 22168811.2
(22) Anmeldetag: 19.04.2022
(51) Int. Cl.: H01Q 1/12, H01Q 7/00, G01L 3/10, G08C 17/04, H01F 38/18

(54) **STATORANTENNEN-EINHEIT FÜR EINE MESSANORDNUNG**

(71) Anmelder: Flender GmbH, 46395 Bocholt (DE)
(72) Erfinder: LEHMKUHL, Marc, 46395 Bocholt (DE); ESSINK, Stefan, 46395 Bocholt (DE); DEGELING, Tobias, 46395 Bocholt (DE)
(74) Vertreter: Michalski Hüttermann & Partner Patentanwälte mbB

(57) **Zusammenfassung**

Statorantennen-Einheit 10 zur Montage in einer Getriebegehäusestruktur 4 und zur Wechselwirkung mit einem in der Getriebegehäusestruktur 4 an einem Getriebebauteil 6 angeordneten und eine Axialrichtung beschreibenden Rotorelement 8, mit einem ringförmigen Antennenhalter 12, einem umfänglich an dem Antennenhalter 12 verlaufenden Signalempfänger 14, einer mit dem Signalempfänger 14 elektrisch und signaltechnisch verbundene und an dem Antennenhalter 12 befestigte Signalauswerteeinheit 16. Der Antennenhalter 12 ist mehrteilig ausgeführt zwischen einer umfänglich geschlossenen Stellung und einer umfänglich geöffneten Stellung über ein Scharnier 18 schwenkbar. Die Statorantennen-Einheit 10 kann mit ihren Komponenten vollständig in einem Getriebe integriert werden und kann universell eingesetzt werden, da sie für unterschiedliche Getriebebaureihen durch reine Skalierung als Serienlösung eingesetzt werden kann.

## Beschreibung

Die Erfindung betrifft eine Statorantennen-Einheit zur Montage in einer Getriebegehäusestruktur und zur Wechselwirkung mit einem in der Getriebegehäusestruktur an einem Getriebebauteil angeordneten und eine Axialrichtung beschreibenden Rotorelement, mit einem ringförmigen Antennenhalter, einem umfänglich an dem Antennenhalter verlaufenden Signalempfänger und einer mit dem Signalempfänger elektrisch und signaltechnisch verbundenen Signalauswerteeinheit.

Bei mechanisch hochbelasteten Bauteilen, wie beispielsweise Getrieben, ist es seit längerem üblich Belastungszustände sensorisch zu erfassen und zu überwachen. Es werden Zustandsgrößen wie Drehmoment, Temperaturen oder Schwingungen erfasst. Die Zustandsgrößen müssen in der Regel auf oder in einem rotierenden Bauteil über entsprechende Sensorkomponenten abgegriffen werden, auf ein stehendes Bauteil übertragen werden und schließlich außerhalb des Getriebes bereitgestellt werden. Hierbei ist es außerdem erforderlich, die Sensorkomponenten mit Energie, d.h. Spannung und Strom, zu versorgen. In der EP 3 786 591 A1 ist eine Sensoreinheit zur Überwachung eines Lagers in einem Getriebe beschrieben. Andere Lösungen sind prinzipiell derart aufgebaut, dass ein rotierendes Bauteil, beispielsweise eine Welle, eine Spule mit Metallkern trägt und von einer stehende Antenneneinheit umgeben ist. Die Antenneneinheit ist mit einer Auswerteeinheit elektrisch und signaltechnisch verbunden, wobei die Auswerteeinheit jedenfalls außerhalb der Getriebegehäusestruktur angeordnet, da sie dort nicht den im inneren der Getriebegehäusestruktur herrschenden Bedingungen ausgesetzt ist. Allerdings ist die Auswerteinheit dann den Umgebungsbedingungen ausgesetzt, zu denen nicht zuletzt ein mechanisches Einwirken durch Handhabungsgeräte zählt. Es besteht ein ständiges Bedürfnis derartige Sensorkomponenten bezüglich ihrer Anordnung und ihres Zusammenwirkens zu verbessern.

Es ist die Aufgabe der Erfindung Maßnahmen aufzuzeigen, die eine verbesserte Anordnung und ein verbessertes Zusammenwirken von Sensorkomponenten in den beschriebenen Anwendungen ermöglichen.

Die Lösung der Aufgabe erfolgt durch eine Statorantennen-Einheit mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Statorantennen-Einheit zur Montage in einer Getriebegehäusestruktur und zur Wechselwirkung mit einem in der Getriebegehäusestruktur an einem Getriebebauteil angeordneten und eine Axialrichtung beschreibenden Rotorelement, umfassend einen ringförmigen Antennenhalter, einen umfänglich an dem Antennenhalter verlaufenden Signalempfänger eine mit dem Signalempfänger elektrisch und signaltechnisch verbundene und an dem Antennenhalter befestigte Signalauswerteeinheit, wobei der Antennenhalter mehrteilig ausgeführt zwischen einer umfänglich geschlossenen Stellung und einer umfänglich geöffneten Stellung über ein Scharnier schwenkbar ist.

Bei der Getriebegehäusestruktur kann es sich um eine Getriebegehäuse handeln, das mehrteilig aufgebaut sein kann. Es können beispielsweise zwei über jeweilige Verbindungsflansche gegeneinander gesetzte Gehäusehälften vorgesehen sein. Es kann auch ein hauptsächliches Gehäuseteil vorgesehen sein, gegen das ein Gehäusedeckel gesetzt wird, um ein geschlossenes Getriebegehäuse zu erhalten. Die Gehäusehälften beziehungsweise das Gehäuseteil können wannenförmig ausgebildet sein. Das Getriebegehäuse kann jeweilige als Bohrungen ausgeführte Wellendurchführungen für eine oder mehrere Antriebswellen und eine oder mehrere Abtriebswellen ausbilden. In einer Bohrung kann eine Lager zur Lagerung einer der Wellen aufgenommen sein. In einem unteren Bereich des Getriebegehäuses kann ein Ölreservoir zur Aufnahme zumindest ein Teil einer Ölfüllung vorgesehen sein. Die Angaben oben und unten beziehen sich auf das Erdschwerefeld und auf die regelmäßige Einbauposition während des bestimmungsgemäßen Gebrauchs des Getriebes.

Bei einem Getriebebauteil handelt es sich beispielsweise um ein rotierendes Bauteil, das durch seine Rotationsachse eine Axialrichtung beschreibt. Bei einem solchen Bauteil kann es sich um eine antriebs- oder abtriebsseitige Getriebewelle, ein Wälz- oder Gleitlager oder auch ein Verzahnungselement handeln. Bei dem Rotorelement kann es sich beispielsweise um eine auf einer Getriebewelle angeordnete Spule mit einem Ferritkern handeln.

Der ringförmige Antennenhalter ist umfänglich um das Rotorelement angeordnet, um mit diesem in eine Wechselwirkung zu treten. Der Antennenhalter ist zweckmäßigerweise gegenüber der Getriebegehäusestruktur gehalten und positioniert. Insbesondere kann eine Positionierung einen radialen und axialen Toleranzausgleich beinhalten. Der Begriff "ringförmig" kann auch als "kreisförmig" bezeichnet werden, sofern dies nicht im streng geometrischen Sinne verstanden wird. Bevorzugt ist allerdings, dass eine Innenumfangsfläche des Antennenhalters geometrisch kreisförmig ist und im Bereich dieser Innenumfangsfläche der umfänglich an dem Antennenhalter verlaufenden Signalempfänger angeordnet ist. Bevorzugt ist der Signalempfänger in die Innenumfangsfläche eingelassen, insbesondere in einer umfänglich verlaufenden Nut bzw. in einem Kanal. Die Nut bzw. der Kanal kann im Querschnitt betrachtet schwalbenschwanz-förmig gestaltet sein, so dass der Signalempfänger einfach eingeklickt werden kann und formschlüssig gegenüber dem Antennenhalter gehalten ist. Alternativ kann auch eine rechteckige, umlaufende Nut mit mehreren über den Umfang verteilte Nocken vorgesehen sein, hinter die der Signalempfänger geklemmt werden kann. Wiederum alternativ kann der Signalempfänger auch in eine rechteckige, umlaufende Nut eingelegt und anschließend eingeklebt werden. Der Antennenhalter kann in einem 3-D-Druckverfahren hergestellt sein. Alternativ kann er im Spritzgussverfahren, Vakuumgussverfahren oder anderen Gussverfahren hergestellt werden. Denkbar ist auch, dass er in einem konventionellen, spanenden Verfahren hergestellt wird.

Die Auswerteeinheit beinhaltet vorliegend die Statorelektronik. Über die Auswerteeinheit wird über einen Wechselstrom ein auf das Rotorelement wirkende Induktionsfeld erzeugt. Hierüber wird das Rotorelement mit einer Spannung versorgt. Die Auswerteeinheit moduliert über den Wechselstrom das Induktionsfeld, so dass über Modulation die jeweiligen Messdaten der zu erfassenden Zustandsgrößen übertragen werden können. Der Signalempfänger umfasst bevorzugt ein Kupferkabel oder ein Kupferband, welches vorisoliert bzw. kaschiert ist, so dass während einer Montage Isolations- und Abdeckschritte nicht erforderlich sind. Das Kupferkabel bzw. Kupferband kann über den Antennenhalter sowohl in axialer wie auch radialer Richtung im richtigen Abstand über dem Rotorelement fixiert werden. Das Kupferkabel bzw. Kupferband ist zweckmäßigerweise als Schleife gelegt. Über den Antennenhalter ist sichergestellt, dass die Schleife zur Vermeidung von Energieunterbrechungen oder Kommunikationsfehlern einen geschlossenen Kreis bildet und während einer Betriebssituation weder eingedrückt, noch verlängert, noch in irgendeiner anderen Art und Weise beeinträchtigt wird. Die Schleife ist über den Antennenhalter derart eingebunden, dass keine mechanischen Kräfte Geometrieänderungen oder Beschädigungen herbeiführen können, sowie Positionsveränderung axial und radial ausgeschlossen sind. Dadurch, dass die Auswerteeinheit an dem Antennenhalter befestigt ist, kann sichergestellt werden, dass Auswerteeinheit und Schleife des Signalempfängers in der Nähe zueinander positioniert werden können.

Die Statorantennen-Einheit ist zweckmäßigerweise geerdet. Hierfür ist eine Verbindung zu der Getriebegehäusestruktur vorgesehen, welches das Erdpotential annimmt. Um die Statorantennen-Einheit mit der Getriebegehäusestruktur zu verbinden, kann ein Erdungsband von der Auswerteeinheit in einen Kanal gelegt werden. Auf das Ende des Erdungsbandes drückt beispielsweise ein Metallblech, welches über eine Schraube mit der Getriebegehäusestruktur verbunden ist. Durch eine Feder unterhalb des Schraubenkopfes kann eine dauerhaft definierte Anpresskraft erzeugt werden. Andere Verbindungsmöglichkeiten des Erdungsbandes sind auch möglich.

Bei der zweiteiligen Ausgestaltung des Antennenhalters kann dieser aus zwei oder mehreren im Wesentlichen gleichen Teilen zusammengesetzt sein. Vorgesehen ist, dass eines dieser Teile die Auswerteinheit trägt. Die zweiteilige Ausgestaltung hat insbesondere den Vorteil, dass die Statorantennen-Einheit um eine Getriebewelle montiert werden kann, die bereits in einer Getriebegehäusestruktur montiert wurde. Insbesondere kann die Statorantennen-Einheit auch im Zuge von Nachrüstungen von bereits im Betrieb befindlichen Getrieben montiert werden. Über das Scharnier kann der zweiteilige Antennenhalter geöffnet bzw. aufgeklappt werden, um in über die Getriebewelle zu führen bzw. zu stülpen. Im Anschluss kann der Antennenhalter wieder geschlossen werden. Hierfür kann ein Einrastmechanismus vorgesehen sein. In einer bevorzugten Ausgestaltung ist vorgesehen, dass der Antennenhalter über zwei Halbschalenelemente zweiteilig ausgeführt ist und die zwei Halbschalenelemente über das Scharnier miteinander verbunden zwischen der umfänglich geschlossenen Stellung und der umfänglich geöffneten Stellung schwenkbar sind. Hierbei kann vorgesehen sein, dass jedes Halbschalenelemente im Wesentlichen 180° eines vollständigen Umfangs beschreiben. Alternativ ist auch es auch möglich, dass drei Schalenelemente vorgesehen sind, die dann über zwei Scharnieren schwenkbar miteinander verbunden werden. Für bestimmte Anwendungen ist auch denkbar, dass mehr als drei Schalenelemente gelenkig miteinander verbunden sind.

Die vorliegend beschriebene Statorantennen-Einheit kann mit ihren Komponenten vollständig in einem Getriebe integriert werden und kann universell eingesetzt werden, da sie für unterschiedliche Getriebebaureihen durch reine Skalierung als Serienlösung eingesetzt werden kann. Konstruktiver Aufwand verringert sich auf ein Minimum. Die Montage der vorkonfektionierten Statorantennen-Einheit lässt sich sehr einfach in den typischen Montageprozess der Getriebe eingliedern. Mit der Statorantennen-Einheit wird eine serienfähige Möglichkeit bereitgestellt, mit der Telemetrien für Messsysteme in Getriebebaureihen eingesetzt werden können. Die vollständige Integration der Statorantennen-Einheit führt zu einer stark erhöhten Zuverlässigkeit der Telemetrie.

In einer bevorzugten Ausgestaltung ist vorgesehen, dass ein außenumfänglich auf dem Antennenhalter angeordneter Anschlag ein Schwenken von der geschlossenen Stellung in die geöffnete Stellung begrenzt. Insbesondere kann der Anschlag außen an dem Scharnier angeordnet sein. Durch den Anschlag und die Begrenzung der Schwenkbewegung ist sichergestellt, dass beim Aufschwenken des Antennenhalters in die geöffnete Stellung der Signalempfänger, also beispielsweise das Kupferkabel bzw. Kupferband, nicht beschädigt wird. Insbesondere kann vorgesehen sein, dass der Anschlag ein Aufschwenken der beiden Halbschalenelemente auf etwas 70° begrenzt. Dieser Öffnungswinkel erlaubt es dem Antennenhalter über den Außendurchmesser einer Getriebewelle gestülpt zu werden.

In einer zudem bevorzugten Ausgestaltung ist vorgesehen, dass der Signalempfänger im Bereich des Scharniers ausgehend von dem umfänglichen Verlauf in Richtung der Signalauswerteeinheit geführt ist. Hierbei kann der Signalempfänger insbesondere so geführt sein, dass der Signalempfänger ausgehend von dem umfänglichen Verlauf zunächst in radialer Richtung an dem Scharnier vorbeigeführt wird und dann erneut in Umfangsrichtung oder auch in tangentialer Richtung zu der Auswerteeinheit geführt wird. Der Signalempfänger, der bevorzugt als Kupferkabel bzw. Kupferband ausgeführt ist, ist mit der Auswerteeinheit leitend verbunden, wozu bevorzugt eine Lötverbindung dient. Um die Zugänglichkeit zu der Auswerteinheit zum Anbringen der Lötverbindung zu gewährleisten ist eine Zugangsöffnung in dem Antennenhalter vorgesehen. Anstatt dieser Lötverbindung kann auch ein Einklipsen, ein Andrücken oder ein Schraubklemmen vorgesehen sein. Durch die Ausgestaltung, bei der die Auswerteeinheit unmittelbar auf dem Antennenhalter angeordnet ist, kann in vorteilhafter Weise sichergestellt werden, dass eine Länge des Signalempfängers von dem Scharnier bis zu einem Anschluss an die Auswerteeinheit ein Abstandsmaß von 400mm nicht überschreitet.

In einer außerdem bevorzugten Ausgestaltung ist vorgesehen, dass der Antennenhalter im Bereich des Scharniers auf einer Axialseite einen bis zu einer Drehachse des Scharniers verlaufende Aussparung ausbildet, zur Aufnahme des in Richtung der Signalauswerteeinheit geführten Signalempfängers. Durch die Aussparung ist sichergestellt, dass beim Aufschwenken des Antennenhalters in die geöffnete Stellung der Signal empfänger, also beispielsweise das Kupferkabel bzw. Kupferband, nicht gelängt oder gestaucht wird.

Eine bevorzugte Ausgestaltung sieht außerdem vor, dass zwei Drahtenden des Signalempfängers an einer dem Scharnier, bevorzugt diametral, gegenüberliegenden Trennstelle des Antennenhalters ausgehend von dem umfänglichen Verlauf nach radial außen geführt sind. Bei der Trennstelle handelt es sich um den Bereich in dem beide Halbschalenelemente in geschlossener Stellung des Antennenhalters aufeinandertreffen und in dem sie sich beim Öffnen auseinanderbewegen. Der Einrastmechanismus kann an der Trennstelle angeordnet sein. An der Trennstelle weist der Signalempfänger zwei Drahtenden auf, die anfänglich nicht miteinander verbunden sind und erst nach erfolgter Montage in einer Getriebestruktur leitend miteinander verbunden werden. Zweckmäßigerweise liegen die beiden Drahtenden im Bereich der Trennstelle in der geschlossenen Stellung des Antennenhalters unmittelbar oder weitestgehend nah beieinander, so dass zu einem späteren Zeitpunkt ohne Weiteres ein Verbinden beider Drahtenden erfolgen kann. In konkreter Ausgestaltung können hierzu die zwei Drahtenden in einem außenumfänglich auf dem Antennenhalter ausgebildeten Trichter münden. Hierdurch kann durch einfache Maßnahmen erreicht werden, dass die zwei Drahtenden in der geschlossenen Stellung und zumindest in einem Betriebszustand des Antennenhalters über eine Verlötung leitend miteinander verbunden sind. Der Trichter erleichtert in vorteilhafter Weise die Applikation eines Lötmittels und die gezielte Zuführung zu den beiden Drahtenden.

In einer weiterhin bevorzugten Ausgestaltung ist vorgesehen, dass die Signalauswerteeinheit in einer Aufnahmetasche des Antennenhalters mit einem Kunstharz vergossen aufgenommen ist. Hierdurch ist sichergestellt, dass die Auswerteeinheit sicher und fest an dem Antennenhalter angebracht ist. Zur eindeutigen Positionierung der Auswerteeinheit während des Zusammensetzens ist die Auswerteeinheit bevorzugt über eine formschlüssige Codierung in der Aufnahmetasche aufgenommen. Im Anschluss an das Einsetzen der Auswerteeinheit erfolgt das Vergießen mit Kunstharz.

In einer zudem bevorzugten Ausgestaltung ist vorgesehen, dass in dem Antennenhalter zumindest ein axial gerichteter Durchbruch vorgesehen ist. Hierdurch ist sichergestellt, dass die Statorantennen-Einheit beispielsweise axial vor einem Lager angeordnet werden kann und durch den zumindest einen axialen Durchbruch ein Ölfluss von und zu dem Lager gewährleistet ist. Ein Ölstau wird somit vermieden.

Die Aufgabe wird ferner gelöst durch ein Getriebe mit einem Getriebegehäuse, zumindest eine in dem Getriebegehäuse über ein Wälzlager drehbar gelagerte Welle, wobei das Wälzlager in einer Gehäusebohrung des Getriebegehäuses einsitzt und zumindest eine die Welle umgebende Statorantennen-Einheit wie zuvor beschrieben vorgesehen ist. Hierbei kann vorgesehen sein, dass der Antennenhalter mit einem zumindest teilweise umlaufenden Kragen in die Gehäusebohrung hineinragt. Beispielsweise kann der Kragen teilumfänglich etwa 200° eines Gesamtumfangs abdecken. In konkreter Ausgestaltung kann vorgesehen sein, dass der Antennenhalter in der Gehäusebohrung sich umfänglich abstützend einsitzt und axial gegen einen Lagerring des Wälzlagers anliegt. Alternativ kann auch vorgesehen sein, dass die axiale Abstützung über eine in der Gehäusebohrung einsitzende Buchse erfolgt. Über die umfängliche Abstützung wird hierbei ein Positionieren des Antennenhalters in radialer Richtung bezogen auf das Getriebegehäuse erreicht. Über die Anlage des Antennenhalter gegen einen Lagerring des Wälzlagers, was beispielsweise der Außenlagerring sein kann, wird ein Positionieren des Antennenhalters in axialer Richtung bezogen auf das Getriebegehäuse erreicht. Vorn Vorteil ist hierbei, dass die Telemetrie sich weitestgehend in unmittelbarer Nähe der Lagerung befindet, erhöht sich die Einsetzbarkeit der Telemetrie. Es lassen sich viele verschiedene relevante Messgrößen aufnehmen und mit Hilfe der Telemetrie übertragen. Messgrößen sind beispielsweise Drehmoment, Axialkräfte, Biegekräfte, Zahnfußspannungen, Temperaturen am Lagerinnenring, Spannungen in Kerbnähe.

Auch wird die zugrundeliegende Aufgabenstellung gelöst durch einen Antriebsstrang umfassend eine als Antriebswelle ausgebildete erste Welle, die über einem Getriebe mit einer als Abtriebswelle ausgebildeten zweiten Welle drehmomentübertragend gekoppelt ist, wobei das Getriebe wie zuvor beschrieben ausgebildet ist.

Gleichermaßen wird die Aufgabenstellung gelöst durch eine Industrieapplikation, umfassend eine Antriebseinheit, die mit einer Abtriebseinheit über ein Getriebe drehmomentübertragend verbunden ist, wobei das Getriebe wie zuvor beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: einen schematischen und prinzipiellen Aufbau einer Messanordnung;
Fig. 2: einen Antennenhalter als Einzelheit in perspektivischer Darstellung;
Fig. 3a), 3b): Detaillierungen des Verlaufs des Signalempfängers;
Fig. 4a): eine Detaillierung der Trennstelle des Antennenhalters;
Fig. 4b): eine Ansicht des Bereichs des Antennenhalters zwischen Scharnier und Aufnahmetasche;
Fig. 5a), 5b): Detailansichten des Antennenhalters und des Signalempfängers im Bereich des Scharniers;
Fig. 6a), 6b): eine weitere Detaillierung des Antennenhalters und des Antennenhalters in geöffneter Stellung;
Fig. 7a), 7b): weitere Detaillierungen der in der Aufnahmetasche einsitzenden Auswerteeinheit;
Fig. 8a), 8b), 9: die Statorantennen-Einheit in einem Zusammenbau mit einer Getriebegehäusestruktur und
Fig. 10: eine schematische Darstellung einer Industrieapplikation mit einer Messanordnung mit Statorantennen-Einheit.

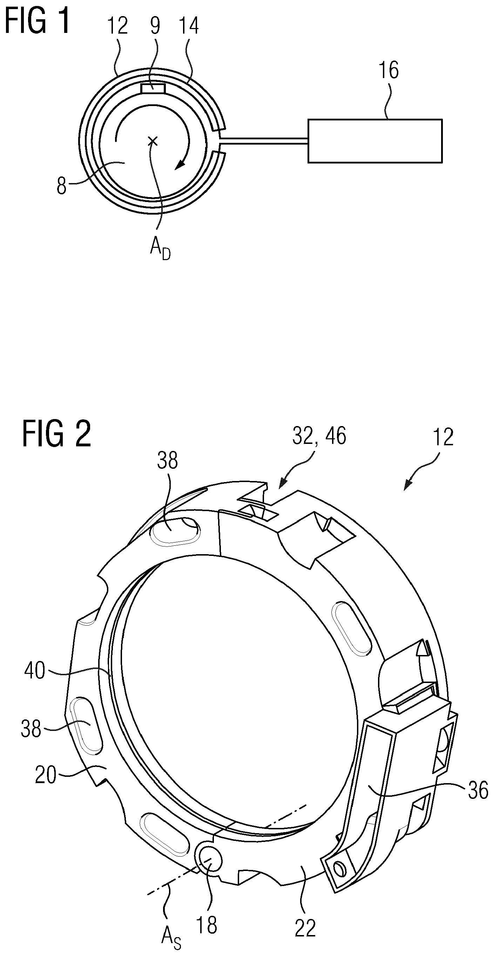

Die Fig. 1 zeigt rein schematisch einen prinzipiellen Aufbau einer Messanordnung 2. Ein mit einer Spule und Ferritkern 9 versehenes Rotorelement 8 ist umgeben von einem Antennenhalter 12, an dem umfänglich ein Signalempfänger 14 angeordnet ist. Der Signalempfänger 14 bildet an dem Antennenhalter 12 eine Schleife. Ausgehend der Schleife an dem Antennenhalter 12 setzt sich der Signalempfänger 14 fort zu einer Signalauswerteeinheit 16. Wie im weiteren Verlauf beschrieben wird, ist die Signalauswerteeinheit 16 an dem Antennenhalter 12 befestigt, was in der Figur 1 nicht dargestellt ist. Der Signal empfänger 16, der Antennenhalter 12 und die Auswerteeinheit 16 sind Teil einer Statorantennen-Einheit 10, die funktionell das Gegenstück zu dem Rotorelement 8 mit Spule und Ferritkern 9 bildet. Der Signal empfänger 14 kann vorliegend als Kupferdraht bzw. Kupferband ausgeführt sein und kann mit einer umhüllenden Isolierung versehen sein. Das Rotorelement 8 ist um eine Drehachse A_{D} drehbar, so dass die Drehachse A_{D} eine Axialrichtung D beschreibt. Mit dem gekrümmten Pfeil ist eine mögliche Rotationsrichtung des Rotorelements 8 symbolisiert. Bei dem Rotorelement 8 kann es sich beispielsweise um eine Getriebewelle handeln.

Die Figur 2 zeigt von einer Statorantennen-Einheit 10 den Antennenhalter 12 als Einzelheit in einer perspektivischen Darstellung. Der Antennenhalter 12 ist im Wesentlichen ringförmig ausgebildet und ist aus zwei Halbschalenelementen 20, 22 zweiteilig zusammengesetzt. Beide Halbschalenelementen 20, 22 sind an ihren einen Enden über ein Scharnier 18 schwenkbar miteinander verbunden und an ihren anderen Enden im Wesentlichen diametral gegenüberliegenden zu dem Scharnier 18 über eine Trennstelle 32 miteinander verbunden. Über die Trennstelle 32 können die jeweiligen Enden der Halbschalenelemente 20, 22 nach Lösen eines Rastmechanismus 46 voneinander gelöst werden, so dass die Halbschalenelementen 20, 22 um eine Schwenkachse As des Scharniers 18 gegeneinander aufgeschwenkt werden können.

Der Antennenhalter 12 bilden auf einem der Halbschalenelemente 20, 22 eine Aufnahmetasche 36 zur Aufnahme und zum Halten der Auswerteeinheit 16 aus. Die Auswerteeinheit ist in der Figur 2 nicht dargestellt. Der Antennenhalter 12 weist ferner mehrere axial gerichtete und umfänglich verteilte Durchbrüche 38 auf, durch die während eines Betriebes ein Ölfluss beispielsweise von und zu einem Lager erfolgen kann. Weiterhin ist an einer Innenumfangsfläche des Antennenhalters 12 ein umlaufender Kanal 40 ausgebildet, der zur Aufnahme des Signalempfängers 14 dient, der in der Figur 2 allerdings nicht dargestellt ist. Der Kanal 40 kann als Nut ausgeführt sein und im Querschnitt betrachtet schwalbenschwanz-förmig gestaltet sein, so dass der Signalempfänger 14 einfach eingeklickt werden kann und formschlüssig gegenüber dem Antennenhalter 12 gehalten ist.

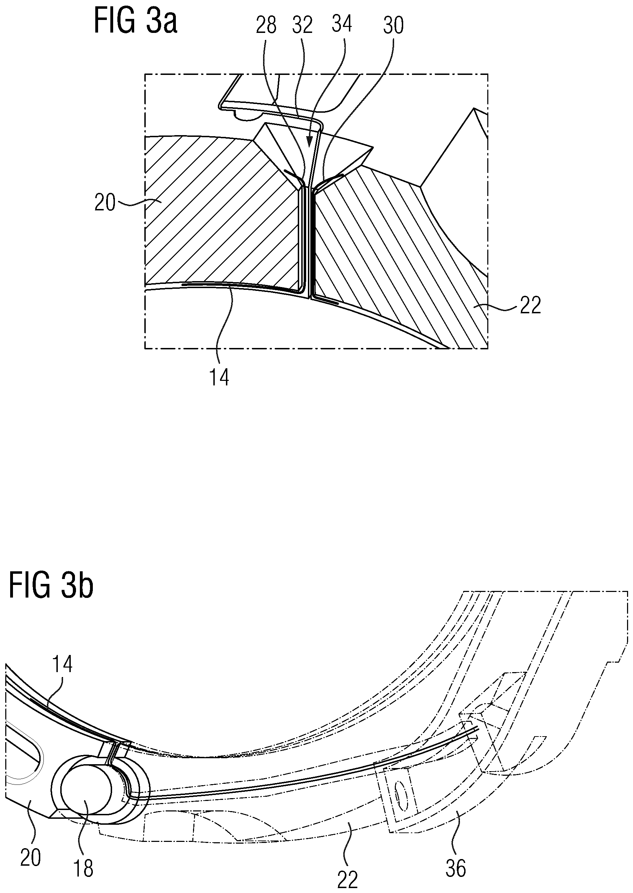

Die Figuren 3a) und 3b) zeigen Detaillierungen des Verlaufs des Signalempfängers 14 im Bereich der Trennstelle 32 - Figur 3a) - und im Bereich des Scharniers 18 bis zu der Aufnahmetasche 36 - Figur 3b). In der Figur 3a) ist zu erkennen, dass der Signalempfänger 14 an der Trennstelle 32 ausgehend von dem umfänglichen Verlauf in dem Kanal 40 nach radial außen geführt ist und zwei Drahtenden 28, 30 des Signalempfängers 14 in einem außenumfänglich auf dem Antennenhalter 12 ausgebildeten Trichter 34 münden. Über den Trichter 34 ist es einfach möglich die zwei Drahtenden 28, 30 in der geschlossenen Stellung und zumindest in einem Betriebszustand des Antennenhalters 12 über eine Verlötung leitend miteinander zu verbinden. Eine Verlötung ist vorliegend nicht dargestellt. In der Figur 3a) ist zu erkennen, dass der Signalempfänger 14 an dem Scharnier 18 in radialer Richtung vorbeigeführt wird und dann erneut in Umfangsrichtung oder auch in tangentialer Richtung zu der Aufnahmetasche 36 an die - nicht dargestellte - Auswerteeinheit 16 geführt wird.

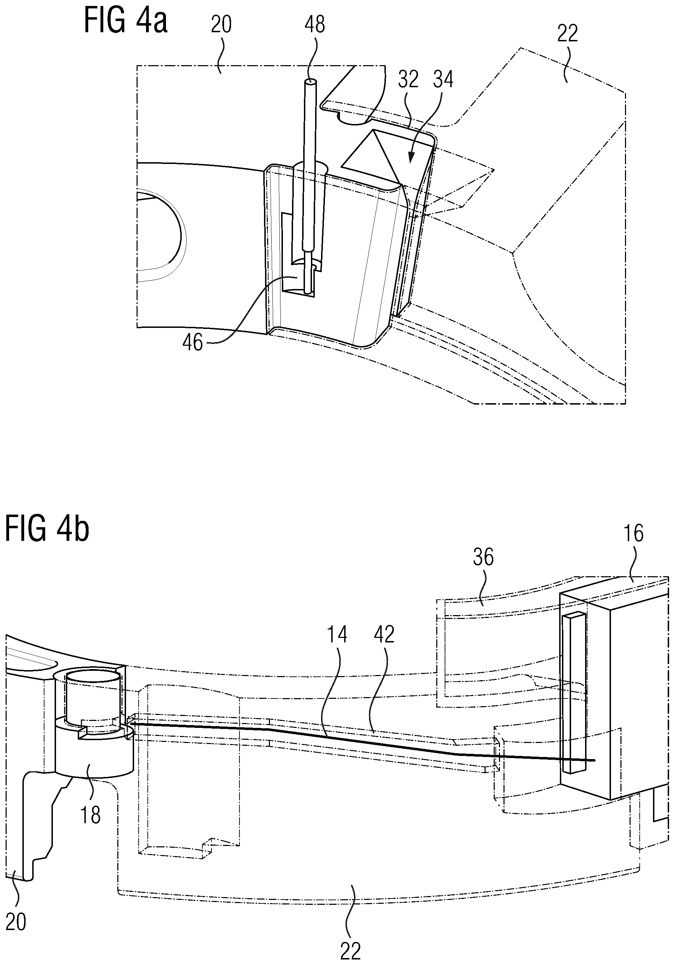

Die Figur 4a) zeigt eine weitere Detaillierung der Trennstelle 32. Die Trennstelle 32 umfasst einen Einrastmechanismus 46, der zwischen den beiden Halbschalenelemente 20, 22 wirksam ist, so dass diese sich nicht unbeabsichtigt in die geöffnete Stellung bewegen. Der Einrastmechanismus 46 kann durch Einführen eines Stift 48 entriegelt werden, so dass anschließend die beiden Halbschalenelemente 20, 22 in die geöffnete Stellung geschwenkt werden können.

Die Figur 4b) zeigt eine Ansicht des Bereichs des Antennenhalters 12, in dem der Signalempfänger 14 von dem Scharnier 18 zu der in der Aufnahmetasche 36 einsitzende Auswerteeinheit 16 geführt ist. Der Signalempfänger 14 verläuft zwischen Scharnier 18 und Aufnahmetasche in einem Führungskanal 42.

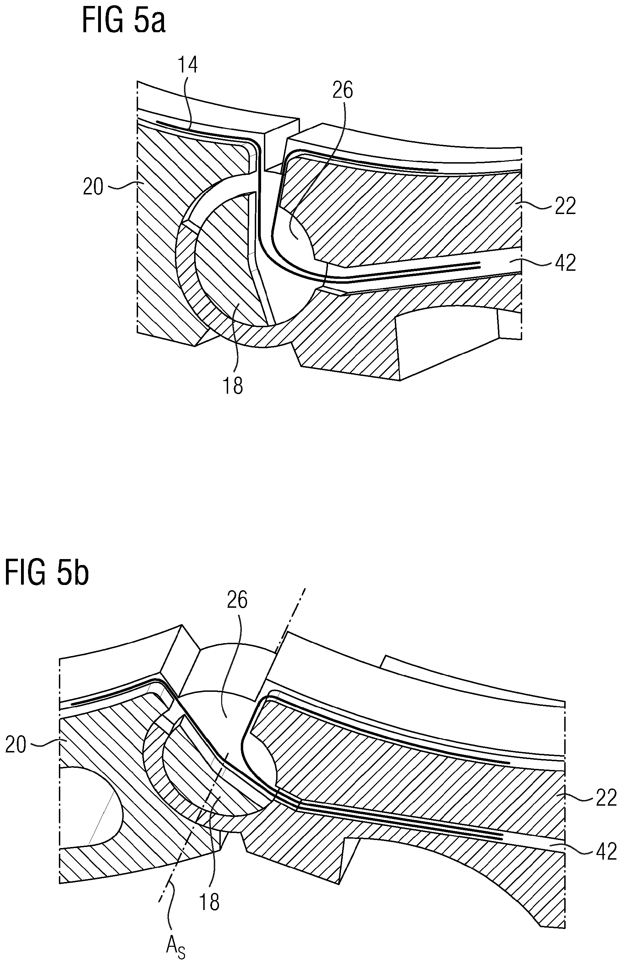

Die Figuren 5a) und 5b) zeigen Detailansichten des Antennenhalters 12 und des Signalempfängers 14 im Bereich des Scharniers 18. Die Figur 5a) zeigt den Antennenhalter 12 in der geschlossenen Stellung, in der die beiden Halbschalenelemente 20, 22 über die - nicht dargestellte - geschlossene Trennstelle 32 einen Ring bilden. Die Figur 5b) zeigt den Antennenhalter 12 in der geöffneten Stellung, in der die Halbschalenelemente 20, 22 über das Scharnier 18 zueinander aufgeschwenkt sind. Auf einer Axialseite des Scharniers 18 ist bis zu der Drehachse Aₛ des Scharniers 18 eine Aussparung 26 ausgebildet, zur Aufnahme des in Richtung der Signalauswerteeinheit 16 geführten Signalempfängers 14.

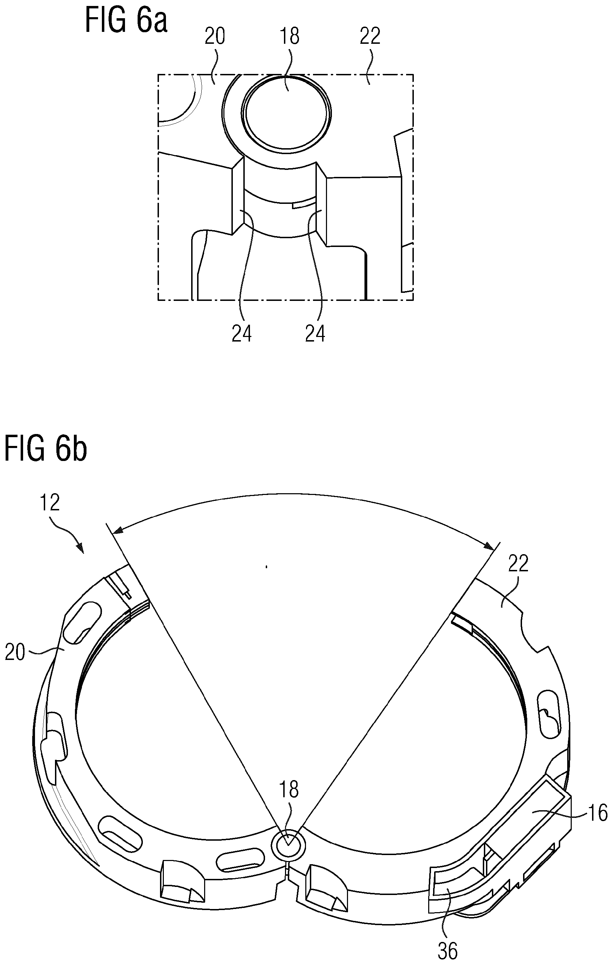

Die Figur 6a) zeigt eine weitere Detaillierung des Antennenhalters 12 und zwar einen Anschlag 24, der ein Schwenken von der geschlossenen Stellung in die geöffnete Stellung der beiden Halbschalenelemente 20, 22 begrenzt. Der Anschlag 24 ist außenumfänglich im Bereich des Scharniers 18 angeordnet. Die Figur 6b) zeigt die beiden Halbschalenelemente 20, 22 des Antennenhalters 12 in der geöffneten Stellung, in der ein weiteres Aufschwenken durch den Anschlag 24 verhindert wird. Ein Wert eines Winkels, um den beide Halbschalenelemente 20, 22 in dem Scharnier 18 gegeneinander in die geöffneten Stellung aufgeschwenkt werden können, kann beispielsweise 70° betragen.

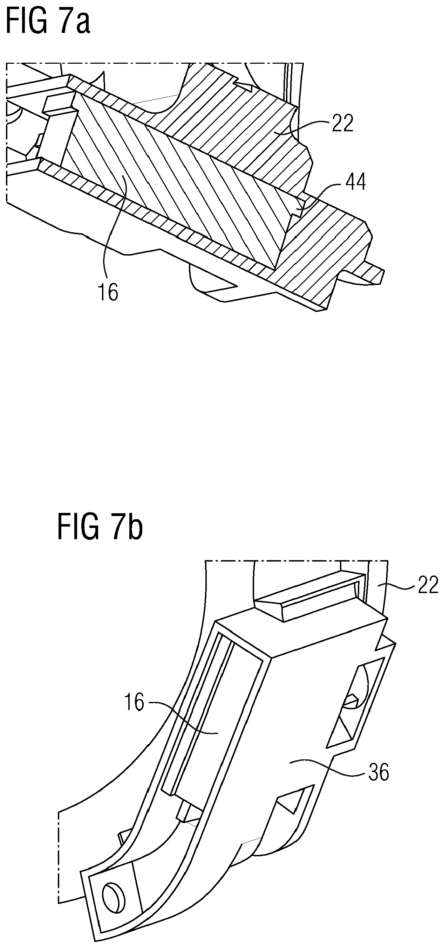

Die Figuren 7a) und 7b) zeigen weitere Detaillierungen der in der Aufnahmetasche 36 einsitzenden Auswerteeinheit 16. Die Auswerteeinheit 16 verfügt zur eindeutigen Positionierung in der Aufnahmetasche 36 über eine formschlüssige Codierung 44.

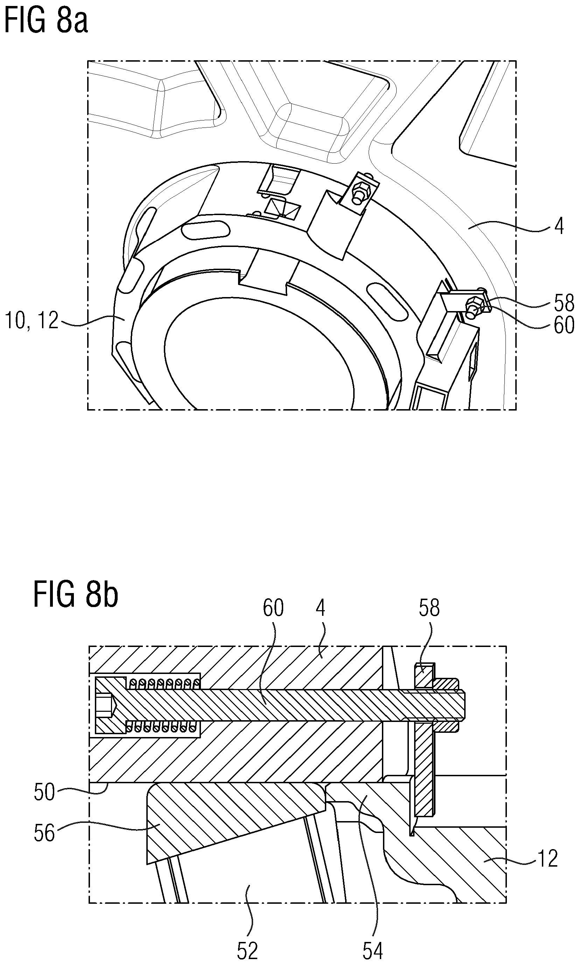

Die Figuren 8a) und 8b) zeigen die Statorantennen-Einheit 10 in einem Zusammenbau mit einer Getriebegehäusestruktur 4. Die Getriebegehäusestruktur 4 wird vorliegend gebildet durch eine Gehäuseseitenwand. In der Gehäuseseitenwand 4 ist eine Lagerbohrung 50 gebildet, in der ein Wälzlager 52 in bekannter Weise einsitzt, siehe Figur 8b). Eine in dem Wälzlager 52 gegenüber der Getriebegehäusestruktur 4 drehbar gehaltene Getriebewelle ist vorliegend nicht dargestellt. Es ist zu erkennen, dass die Statorantennen-Einheit 10 von einer Innenseite gegen die Gehäuseseitenwand 4 gehalten ist. Insbesondere ist vorgesehen, dass der Antennenhalter 12 einen umlaufenden oder teilweise umlaufenden Kragen 54 ausbildet, der in die Lagerbohrung 50 hineinragt. Der Antennenhalter 12 stützt sich über den Kragen 54 in der Lagerbohrung 50 umfänglich ab und liegt axial gegen den Lageraußenring 56 des Wälzlagers 52 an. Ferner sind über den Umfang des Antennenhalters 12 mehrere Laschen 58 vorgesehen. Über die Laschen 58 und eine entsprechende Anzahl an Axialstiften 60 ist der Antennenhalter 12 und damit die gesamte Statorantennen-Einheit 10 gegenüber der Gehäuseseitenwand 4 gehalten, wobei die axiale und radiale Positionierung, wie bereits beschrieben, über die Anlage des Kragens 54 innerhalb der Lagerbohrung 50 und gegen den Lageraußenring 56 erfolgt.

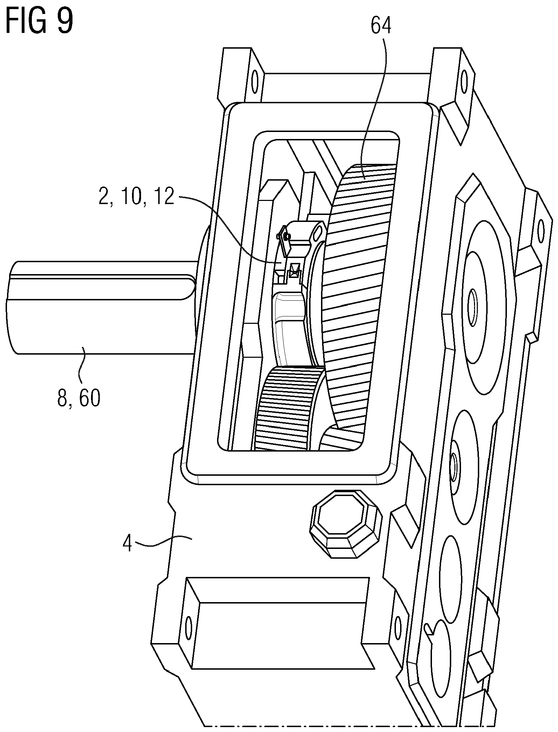

Die Figur 9 zeigt eine weitere Darstellung der Statorantennen-Einheit 10 in einem Zusammenbau mit einer Getriebegehäusestruktur 4 in einer perspektivischen Ansicht. Gezeigt ist ein Getriebegehäuse 4, in dem mehrere Getriebebauteile 6 beispielsweise in Form von Getriebewellen und Zahnrädern aufgenommen sind. Eine Statorantennen-Einheit 10 ist, wie beschrieben, an einer Gehäuseseitenwand 4 zwischen dieser und einem Zahnrad 64 angeordnet, wobei die Statorantennen-Einheit 10 die Getriebewelle 62 umgebend angeordnet ist. Die Getriebewelle 62 weist eine Spule und Ferritkern 9 wie zuvor beschrieben auf und bildet somit ein Rotorelement 8. Die Statorantennen-Einheit 10 und das Rotorelement 8 bilden zusammen eine Messanordnung 2.

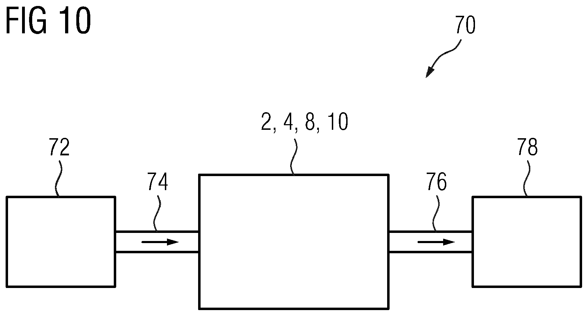

Die Figur 10 zeigt einen schematischen Aufbau einer Ausführungsform der beanspruchten Industrie-Applikation 70, die eine Antriebseinheit 72 umfasst, die als Elektromotor, Verbrennungsmotor oder Hydraulikmotor ausgebildet sein kann. Durch die Antriebseinheit 72 wird über eine Antriebswelle 74 eine Antriebsleistung bereitgestellt, die über ein Getriebe mit einer Getriebegehäusestruktur 4 und eine Abtriebswelle 76 zu einer Abtriebseinheit 78 übertragen werden kann. Die Getriebegehäusestruktur 4 weist eine wie zuvor beschriebene Messanordnung 2 mit einem Statorantennen-Einheit 10 und einem Rotorelement 8 auf.

### Bezugszeichenliste

- 2: Messanordnung
- 4: Getriebegehäusestruktur
- 6: Getriebebauteil
- 8: Rotorelement
- 9: Spule und Ferritkern
- 10: Statorantennen-Einheit
- 12: Antennenhalter
- 14: Signalempfänger
- 16: Signalauswerteeinheit
- 18: Scharnier
- 20: Halbschalenelement
- 22: Halbschalenelement
- 24: Anschlag
- 26: Aussparung
- 28: Drahtende
- 30: Drahtende
- 32: Trennstelle
- 34: Trichter
- 36: Aufnahmetasche
- 38: Durchbruch
- 40: Kanal
- 42: Führungskanal
- 44: Codierung
- 46: Einrastmechanismus
- 48: Stift
- 50: Lagerbohrung
- 52: Wälzlager
- 54: Kragen
- 56: Lageraußenring
- 58: Lasche
- 60: Axialstift
- 62: Getriebewelle
- 64: Zahnrad

## Patentansprüche

1. Statorantennen-Einheit (10) zur Montage in einer Getriebegehäusestruktur (4) und zur Wechselwirkung mit einem in der Getriebegehäusestruktur (4) an einem Getriebebauteil (6) angeordneten und eine Axialrichtung beschreibenden Rotorelement (8), umfassend
einen ringförmigen Antennenhalter (12),
einen umfänglich an dem Antennenhalter (12) verlaufenden Signalempfänger (14), eine mit dem Signalempfänger (14) elektrisch und signaltechnisch verbundene und an dem Antennenhalter (12) befestigte Signalauswerteeinheit (16),
wobei der Antennenhalter (12) mehrteilig ausgeführt zwischen einer umfänglich geschlossenen Stellung und einer umfänglich geöffneten Stellung über ein Scharnier (18) schwenkbar ist.

2. Statorantennen-Einheit (10) nach Anspruch 1, **dadurch gekennzeichnet, dass** der Antennenhalter (12) über zwei Halbschalenelemente (20, 22) zweiteilig ausgeführt ist und die zwei Halbschalenelemente (20, 22) über das Scharnier (18) miteinander verbunden zwischen der umfänglich geschlossenen Stellung und der umfänglich geöffneten Stellung schwenkbar sind.

3. Statorantennen-Einheit (10) nach Anspruch 1 oder 2, **dadurch gekennzeichnet, dass** ein außenumfänglich auf dem Antennenhalter (12) angeordneter Anschlag (24) ein Schwenken von der geschlossenen Stellung in die geöffnete Stellung begrenzt.

4. Statorantennen-Einheit (10) nach einem der Ansprüche 1 bis 3, **dadurch gekennzeichnet, dass** der Signalempfänger (14) im Bereich des Scharniers (18) ausgehend von dem umfänglichen Verlauf in Richtung der Signalauswerteeinheit (16) geführt ist.

5. Statorantennen-Einheit (10) nach einem der Ansprüche 1 bis 4, **dadurch gekennzeichnet, dass** der Antennenhalter (12) im Bereich des Scharniers (18) auf einer Axialseite einen bis zu einer Drehachse des Scharniers (18) verlaufende Aussparung (26) ausbildet, zur Aufnahme des in Richtung der Signalauswerteeinheit (16) geführten Signalempfängers (14).

6. Statorantennen-Einheit (10) nach einem der Ansprüche 1 bis 5, **dadurch gekennzeichnet, dass** zwei Drahtenden (28, 30) des Signalempfängers (14) an einer dem Scharnier (18), bevorzugt diametral, gegenüberliegenden Trennstelle (32) des Antennenhalters (12) ausgehend von dem umfänglichen Verlauf nach radial außen geführt sind.

7. Statorantennen-Einheit (10) nach Anspruch 6, **dadurch gekennzeichnet, dass** die zwei Drahtenden (28, 30) in einem außenumfänglich auf dem Antennenhalter (12) ausgebildeten Trichter (34) münden.

8. Statorantennen-Einheit (10) nach Anspruch 6 oder 7, **dadurch gekennzeichnet, dass** die zwei Drahtenden (28, 30) in der geschlossenen Stellung und zumindest in einem Betriebszustand des Antennenhalters (12) über eine Verlötung leitend miteinander verbunden sind.

9. Statorantennen-Einheit (10) nach einem der Ansprüche 1 bis 8, **dadurch gekennzeichnet, dass** die Signalauswerteeinheit (16) in einer Aufnahmetasche (36) des Antennenhalters (12) mit einem Kunstharz vergossen aufgenommen ist.

10. Statorantennen-Einheit (10) nach Anspruch 9, **dadurch gekennzeichnet, dass** die Signalauswerteeinheit (16) zur eindeutigen Positionierung über eine formschlüssige Codierung in der Aufnahmetasche (36) aufgenommen ist.

11. Statorantennen-Einheit (10) nach einem der Ansprüche 1 bis 10, **dadurch gekennzeichnet, dass** in dem Antennenhalter (12) zumindest ein axial gerichteter Durchbruch (38) vorgesehen ist.

12. Getriebe mit einem Getriebegehäuse, zumindest eine in dem Getriebegehäuse (4) über ein Wälzlager (52) drehbar gelagerte Welle (52), wobei das Wälzlager (52) in einer Gehäusebohrung (50) des Getriebegehäuses (4) einsitzt, **dadurch gekennzeichnet, dass** zumindest eine die Welle (52) umgebende Statorantennen-Einheit (10) nach einem der Ansprüche 1 bis 11 vorgesehen ist.

13. Getriebe nach Anspruch 12, **dadurch gekennzeichnet, dass** der Antennenhalter (10) in der Gehäusebohrung (50) sich umfänglich abstützend einsitzt und axial gegen einen Lagerring (56) des Wälzlagers (52) oder eine in der Gehäusebohrung einsitzende Buchse anliegt.

14. Antriebsstrang (52), umfassend eine als Antriebswelle ausgebildete erste Welle (2), die über einem Getriebe (10) mit einer als Abtriebswelle (74) ausgebildeten zweiten Welle (4) drehmomentübertragend gekoppelt ist, **dadurch gekennzeichnet, dass** das Getriebe (10) nach Anspruch 12 oder 13 ausgebildet ist.

15. Industrieapplikation (70), umfassend eine Antriebseinheit (72), die mit einer Abtriebseinheit (74) über ein Getriebe drehmomentübertragend verbunden ist, **dadurch gekennzeichnet, dass** das Getriebe (4) nach Anspruch 12 oder 13 ausgebildet ist.
